Europäisches Patentamt

(19) European Patent Office

Office européen des brevets

(11) Publication number: 0 196 373
A1

(12) **EUROPEAN PATENT APPLICATION**

(21) Application number: 85202119.5

(22) Date of filing: 19.12.85

(51) Int. Cl.⁴: F 25 D 25/04
B 65 G 47/51, B 65 G 47/61
F 26 B 15/24

(30) Priority: 04.04.85 NL 8501012

(43) Date of publication of application:
08.10.86 Bulletin 86/41

(84) Designated Contracting States:
AT BE CH DE FR GB IT LI LU NL SE

(71) Applicant: Rolco International B.V.
Simon de Cockstraat 4 Postbus 5074
NL-5004 EB Tilburg(NL)

(72) Inventor: Boelen, Adrianus Johannes Maria
Ringbaan Oost 265
NL-5014 GE Tilburg(NL)

(74) Representative: Lips, Hendrik Jan George, Ir. et al,
HAAGSCH OCTROOIBUREAU Breitnerlaan 146
NL-2596 HG Den Haag(NL)

(54) Conveyor system for application in a conditioned housing.

(57) Conveyor system (1) for application in a conditioned housing (2) whereby products (9), in particular food products, are submitted to a specific treatment, said conveyor system (1) consisting of product carriers (14) mounted on at least one flexible conveyor element (6) guided over a number of guide wheels (7, 26) being stationary mounted in a frame and guide wheels (8, 25) being in pairs movable in such a manner that the products (9) not removed from the product carriers (14) at the outlet (15, 24) will be moved again through at least a part of the conditioned housing (2). The system being controlled by product sensors positioned at the outlet (15, 24) of the housing (2).

./...

FIG. 1

Conveyor system for application in a conditioned housing.

The invention relates to a conveyor system for application in a conditioned housing, whereby products, in particular food products, are submitted to a specific treatment in the housing, said housing being provided with an inlet and an outlet.

Conditioned housings are used for bringing products in a specific condition, such as for example deep-freezing of meat products. Conditioned housings are also used for drying, heating and similar treatments to bring products in a desired condition. It is customary to convey products on belts through such housings. A much applied system is a helical or spiral belt, whereby the products describe a helical path in the conditioned housing from the inlet upward and subsequently beside this a helical path downward again to the inlet of the conditioned housing.

The known conveyor systems running through a conditioned housing have disadvantages with respect to the optimal use of the conditioned housing and a far from optimal air current through the housing so that the yield is unfavourable in particular with respect to the energy consumption.

The invention aims to provide an improved device of the type as described above.

To that end  the device is executed such that the conveyor system consists of product carriers mounted on at least one flexible conveyor element guided over a number of guide wheels being stationary  mounted in a frame and guide wheels being in pairs movable, the conveyor element describing substantially vertical paths, whereby both directly near the inlet as well as near the outlet a pair of guide wheels, which are stationary  in respect to each other, are mounted such that they are together movable in a substantially vertical direction, with which all intermediate guide wheels are rotatably mounted at a stationary position in the frame, said conveyor element being guided from the set of two vertically adjustable movable guide wheels at the outlet over at least two stationary mounted guide wheels towards the set of two vertically adjustable movable guide wheels near the inlet in such manner that the products not removed from the product carriers at the outlet will be moved again through at least a part of the conditioned housing.

The advantages of this device are an optimal use of the expensive conditioned housing and a high yield with respect to energy consumption.

A further elaboration of the invention consists in it that the speed of the endless flexible conveyor element is adjusted to the required residence time of the product in the conditioned housing and that the vertical position of the set of two vertically adjustable movable guide wheels at the inlet and at the outlet of the conditioned housing is adjustable on the basis of data provided by product sensors and in addition that the products suspended from or on the product carriers are returnable from the outlet to the inlet to go once more through the complete cycle through the conditioned housing on the basis of data provided by product sensors.

The advantage hereof is, that the product can always be brought into the desired condition prior to leaving the conditioned housing. In the known apparatus a substantial loss of products occurs if it is established that the desired condition is not achieved. The rejected products are usually discharged and then are suitable as cattle-fodder only.

A practical embodiment of the invention consists in it that the flexible conveyor element is a chain and the guide wheels are chain wheels.

The advantage hereof is that the conveyor system functions without slip.

In addition the conveyor system according to the invention is made in such a way, that the product carriers have an open construction so that the air current through the conditioned housing has a resistance which is as small as possible. The advantage hereof is, that an air pump with smaller capacity will suffice.

According to an elaboration of the invention the open construction of the product carrier is achieved in that it is assembled of rods, which are bent as open, substantially U-shaped bows having one extended leg, said bows being coupled with each other by at least two straight rods, means being present to adjust the position of the extended leg with respect to the horizontal plane, the supply and discharge means for the products to and from the conveyor system in the conditioned housing each comprising a belt consisting of a number of strings between which strings the long leg of the substantially U-shaped bow of a product carrier can be received, the product carriers and the belts being guided such and having such a speed that a product is taken from the belt at the inlet and is deposited on the belt at the outlet.

The advantage hereof being that the supply and discharge of products into and from the conditioned housing takes place in a simple and reliable manner.

In addition the control of the conveyor system is carried out in such a way that the data of the product sensors are processed in a programmed control unit, which optimalizes the residence time of the product to be treated in the conditioned housing on the basis of the speed of the flexible conveyor element and the position of the pair of together vertically movable guide wheels both at the inlet as well as at the outlet, by which more or less accumulation of the products in the conditioned housing occurs, said programmed control unit consisting of a PLC or a microprocessor.

The advantages hereof are that the conveyor system can work in the most exact way and such that any desired
parameter can be taken into account by means of software.

The invention is elucidated by means of an embodiment
described with reference to the drawing, in which

Fig. 1 schematically shows a side view of the
conveyor system  within the conditioned housing
with a supply and discharge conveyor belt outside
the conditioned housing;
Fig. 2 schematically shows a side view of another
embodiment of the conveyor system through the
conditioned housing with which the inlet and
outlet are positioned the one above the other
at one side of the conditioned housing;
Fig. 3 shows a rear view of a part of the
conveyor system with supporting trunnions;
Fig. 4 shows a cross-section over the product
carrier according to line IV-IV in Fig. 3; and
Fig. 5 shows a side view partially in cross-
section of an end roller of the conveyor belt.

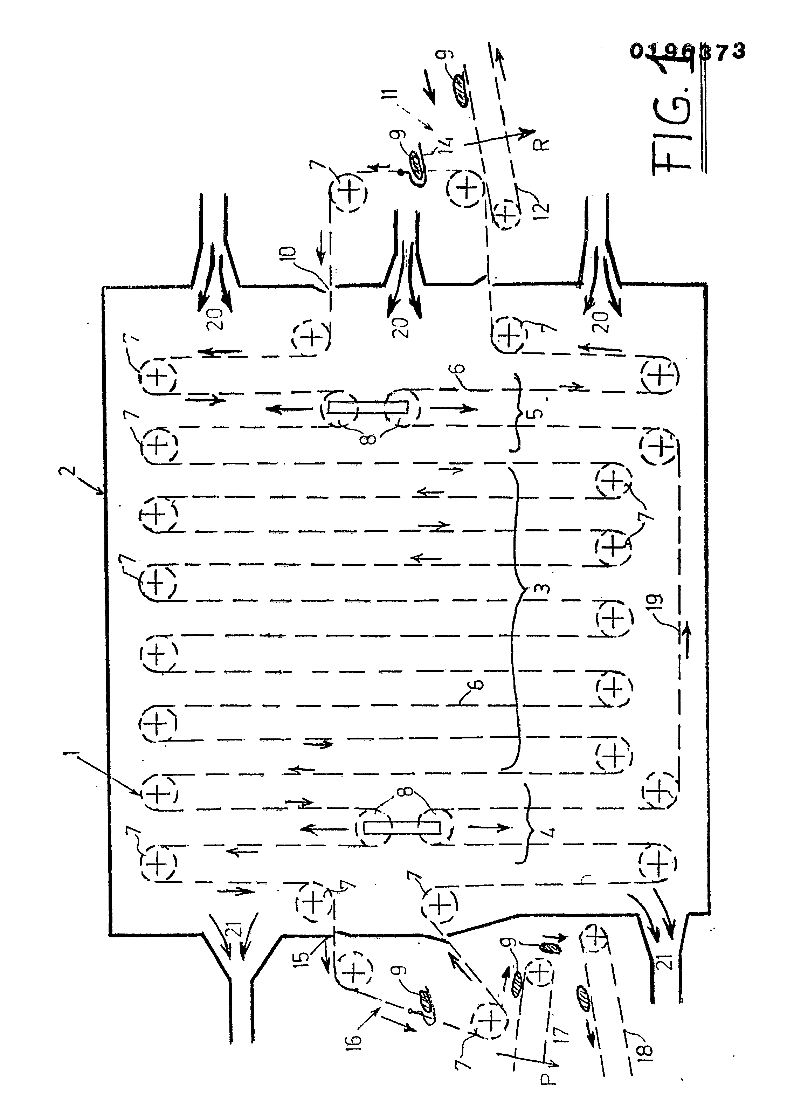

In Fig. 1 the conveyor system 1 is positioned in the
conditioned housing 2. The conveyor system 1 comprises
a stationary  portion 3 and the adjustable portions
4 and 5. The flexible conveyor element 6 consist of a
chain, running over the stationary chain wheels 7 and
the chain wheels 8 which are movable in pairs.

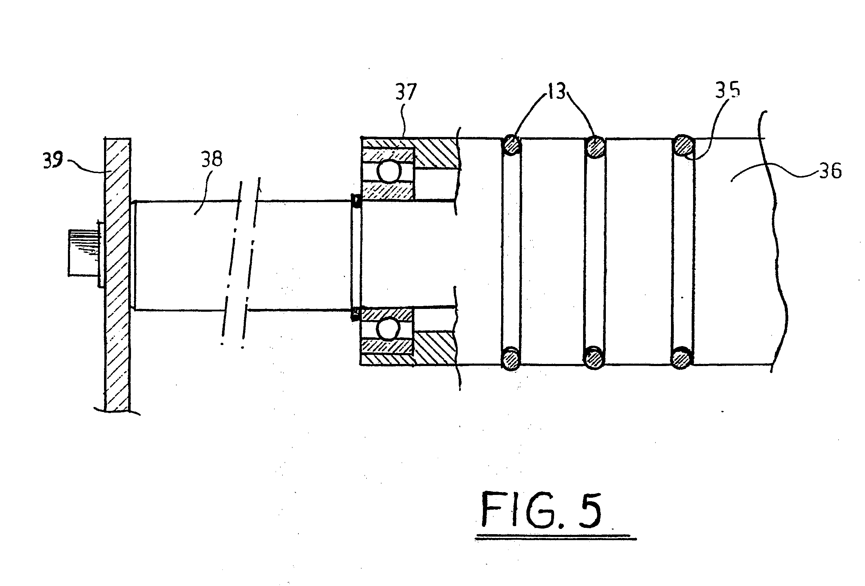

The supply of products 9 to the inlet 10 of the conditioned
housing 2 takes place by the supply section 11, in which
the products 9 are removed from the belt 12, consisting of a
number of strings 13 (Fig. 5) by means of the product
carriers 14. The product 9 traverses the conditioned
housing 2 in the direction of the arrows and reaches
via the outlet 15 the outlet section 16, where a product
carrier will come to lie between the strings 13 of the
belt 17. The belt 17 is having a higher speed than the
product carrier 14,because of which the conditioned
product 9 is taken along by the belt 17 and will subsequently fall onto the belt 18. From this the conditioned product 9 will be removed to be packed.

In the outlet section 16 product sensors (not shown) are positioned. If by these sensors it is indicated that the product 9 is not yet sufficiently conditioned the belt 17 will swing downward in the direction of arrow P and the product 9 will reenter into the conditioned housing 2 and will return to the supply section 11 via the chain section 19 and the belt 12 will then swing downward in the direction of arrow R and the product 9 is moved again through the conditioned housing 2.

The chain wheels 8, movable in pairs, may be moved downward in the meantime in order to extend the conveyor path through the conditioned housing 2, so that an optimal residence time in the conditioned housing 2 can be obtained and the products 9 can leave the product carriers 14 by means of the belt 17 being swung back upwardly because then no return is necessary and products can be taken up again at the supply section 11 when the belt 12 has swung back upwardly too.

As can be seen in Fig. 1 the conditioned housing 2 can be filled optimally with the products 9 moving through it. An air current 20 may be caused through the conditioned area, which is sucked off or released again at 21.

The chain wheels 7 are rotatably mounted on a frame, not shown. The set of in pairs movable chain wheels 8 can be moved up and down in substantially vertical direction, so that it is possible to adjust the residence time of the products 9 in the conditioned housing.

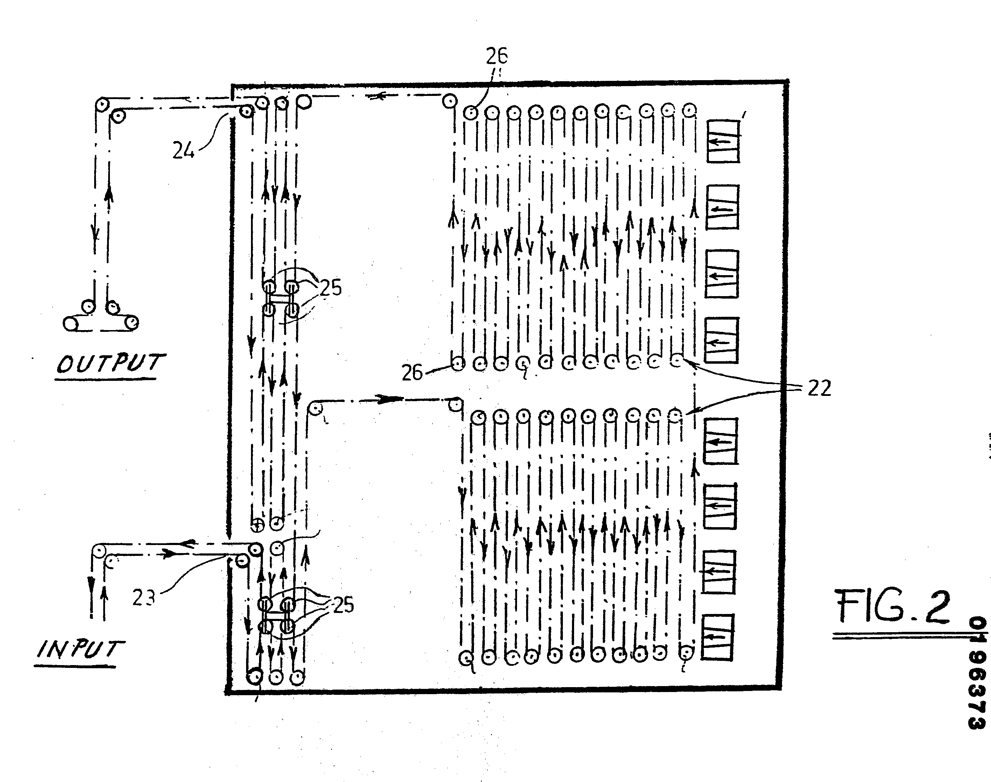

Fig. 2 schematically shows a side view of another embodiment of the conveyor system positioned in the conditioned housing 2, said conveyor system being positioned in a pair of blocks 22 the one above the other, the input 23 being located vertically below the output 24. The chain wheels 25, movable in pairs, also are executed

- 6 -

0196373

as a double set, by which the buffer capacity can be increased. The chain wheels 26 again are rotatably mounted on a frame, not shown.

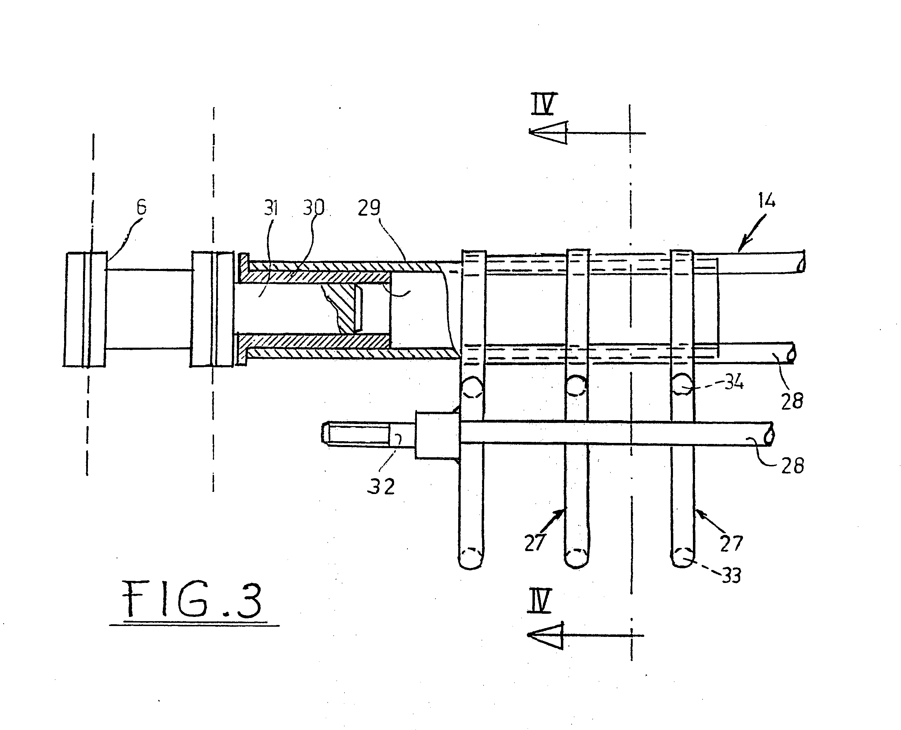

Fig. 3 shows a rear view of the open bow-shaped construction of the product carriers 14. The open bows 27 are coupled together by the straight rods 28 some of which at their ends are connected to a tube section 29, in which a sleeve 30 is provided. A trunnion 31 is connected to the chain 6 and extends into the sleeve 30 for supporting the carrier 14 by the chain 6. To one of the rods 28 a shaft 32 has been welded, on which balance weights (not shown) can be mounted.

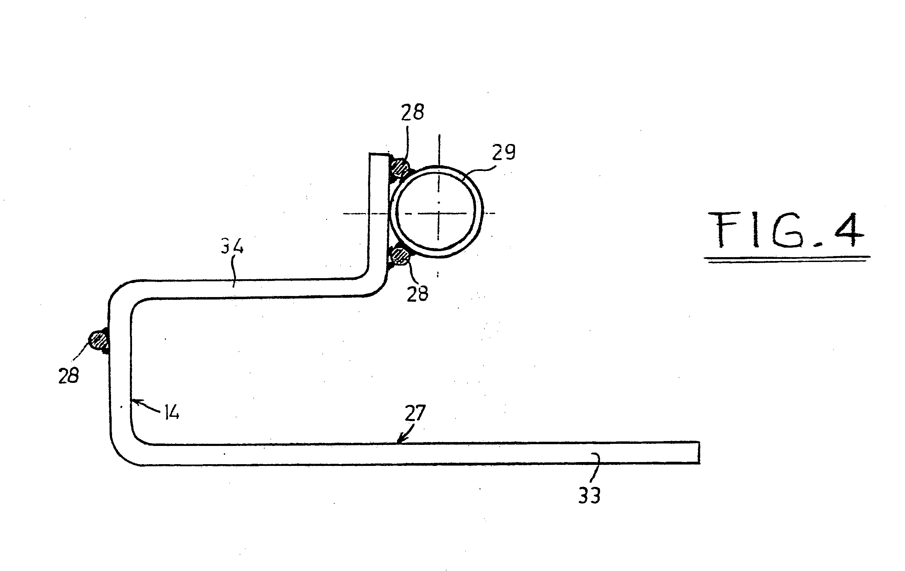

Fig. 4 shows a cross-section according to line IV-IV of Fig. 3. From this figure it appears that the lower leg 33 of the substantially U-shaped bow 27 is made longer than the upper leg 34 in order to be able to provide better support for the products 9.

In Fig. 5 the principle of the belts 12, 17 and 18 is shown. The strings 13 are lying in grooves 35 of the roller 36 said roller being provided with a bearing 37 supported by the shaft 38, mounted in a frame 39.

As can be seen in the Figures 1 and 2 a plurality of embodiments is possible for the conveyor system according to the invention, without leaving the scope of the invention.

1. Conveyor system (1) for application in a conditioned housing (2) whereby products (9), in particular food products, are submitted to a specific treatment in the housing (2), said housing (2) being provided with an inlet (10,23) and an outlet (15,24), characterized in that the conveyor system (1) consists of product carriers (14) mounted on at least one flexible conveyor element (6) guided over a number of guide wheels (7,26) being stationary mounted in a frame and guide wheels (8,25) being in pairs movable, the conveyor element (6) describing substantially vertical paths, whereby both directly near the inlet (10,23) as well as near the outlet (15,24) a pair of guide wheels (8,25) which are stationary in respect to each other, are mounted such that they are together movable in a substantially vertical direction, with which all intermediate guide wheels (7,26) are rotatably mounted at a stationary position in the frame, said conveyor element(6) being guided from the set of two vertically adjustable movable guide wheels (8,25) at the outlet (15,24) over at least two stationary mounted guide wheels (7,26) towards the set of two vertically adjustable movable guide wheels (8,25) near the inlet (10,23) in such a manner that the products (9) not removed from the product carriers (14) at the outlet (15,24) will be moved again through at least a part of the conditioned housing (2).

2. Conveyor system according to claim 1, characterized in that the speed of the endless flexible conveyor element (21) is adjusted to the required residence time of the product (9) in the conditioned housing (2).

3. Conveyor system according to claim 1 or 2, characterized in that the vertical position of the set of two vertically adjustable movable guide wheels (8,25) at the inlet
(10,23) and at the outlet (15,24) of the conditioned
housing (2) is adjustable on the basis of data
provided by product sensors, positioned at the
outlet (15,24) of the housing (2).

4. Conveyor system according to claim 3,
characterized in
that the products (9) suspended from or on the
product carriers (14) are returnable from the outlet
(15,24) to the inlet (10,23) to go once more
through at least a part of the cycle through the
conditioned housing (2) on the basis of data
provided by the product sensors.

5. Conveyor system according to claim 1 or 2,
characterized in
that the flexible conveyor element (6) is a chain
and the guide wheels (7,8,25,26) are chain wheels.

6. Conveyor system according to one of the preceding
claims,
characterized in
that the product carriers (14) have an open construction
so that the air current through the conditioned
housing (2) has a resistance which is as small as
possible.

7. Conveyor system according to claim 6,
characterized in
that each product carrier (14) is assembled of rods,
which are bent as open, substantially U-shaped bows
(27) having one extended leg (33), said bows (27)
being coupled with each other by at least two
straight rods (28), means (32) being present to adjust
the position of the extended leg (33) with respect
to the horizontal plane.

8. Conveyor system according to one of the preceding claims,
characterized in that the supply and discharge means (11,16) for the products (9) to and from the conveyor system (1) in the conditioned housing (2) each comprise a belt (12,17) consisting of a number of strings (13) between which strings the lower leg (33) of the substantially U-shaped bow (27) of a product carrier (14) can be received, the product carriers (14) and the belts (12,17) being guided such and having such a speed that a product (9) is taken from the belt (12) at the inlet (10) and is deposited on the belt (17) at the outlet (15).

9. Conveyor system according to one of the preceding claims, characterized in
that the control of the conveyor system (1) is carried out in such a way that the data of the product sensors are processed in a programmed control unit, which optimalizes the residence time of the product (9) to be treated in the conditioned housing (2) on the basis of the speed of the flexible conveyor element (6) and the position of the pair of together vertically movable guide wheels (8,25) both at the inlet (10,23) as well as the outlet (15,24) by which more or less accumulation of the products in the conditioned housing (2) occurs, said programmed control unit consisting of a PLC or a microprocessor.

-----

FIG. 1

0196373

OUTPUT

INPUT

24

23

25

26

22

FIG. 2

Il.

01 96373

FIG.3

6   31 30 29   14

IV

IV

34

28

32   28

27   27   33

III.

0196373

FIG.4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | FR-A-2 125 518 (HALL-THERMOTANK) * Page 3, line 1 - page 6, line 31; figures 1,2 * | 1 | F 25 D 25/04 B 65 G 47/51 B 65 G 47/61 F 26 B 15/24 |
| A | | 2,3 | |
| | --- | | |
| Y | US-A-1 500 923 (BUCKLEY) * Page 3, lines 106-117; figure 1 * | 1 | |
| A | | 4,5 | |
| | --- | | |
| A | GB-A- 719 696 (S.B. ENGINEERING) * Page 1, line 68 - page 3, line 104; figures 1-3 * | 1,2,5, 8 | |
| | | | **TECHNICAL FIELDS SEARCHED (Int. Cl.4)** |
| | --- | | |
| A | CH-A- 440 137 (GEORGE VOKES (INFRA-RED)) * Column 1, line 34 - column 4, line 47; figures 1-8 * | 1,4-6 | F 25 D B 65 G F 26 B |
| | --- | | |
| A | DE-A-3 225 714 (PALESCH) * Page 10, last paragraph - page 20, second paragraph; figures 1-9 * | 1,5 | |
| | ---      -/- | | |

The present search report has been drawn up for all claims

| Place of search THE HAGUE | Date of completion of the search 15-07-1986 | Examiner BOETS A.F.J. |
|---|---|---|

European Patent Office

| | DOCUMENTS CONSIDERED TO BE RELEVANT | | Page 2 | |
|---|---|---|---|---|

| Category | Citation of document with indication, where appropriate, of relevant passages | Relevant to claim | CLASSIFICATION OF THE APPLICATION (Int. Cl.4) |
|---|---|---|---|
| A | FR-E- 85 764 (LE MATERIEL CERAMIQUE MODERNE) <br> * Page 2, left-hand column, paragraph 8 - right-hand column, paragraph 6; figures 1-3 * | 1,4,5 | |
| A | US-A-4 231 470 (PARKES) <br> * Column 2, line 56 - column 5, line 13; figures 1-4 * | 1,9 | |
| A | GB-A-1 142 954 (FRICK) <br> * Page 6, lines 48-65; figures 1-24 * | 2 | |
| A | US-A-3 370 693 (MARSDEN) <br> * Column 2, line 69 - column 4, line 58; figures 1-3 * | 3 | |
| A | DE-A-2 636 371 (DSO RODOPA) <br> * Page 4, paragraph 1 - page 5, paragraph 1; figure 3 * | 6,7 | TECHNICAL FIELDS SEARCHED (Int. Cl.4) |
| A | DE-A-2 737 355 (ELELMEZESIPARI TERVEZÖ VALLALAT) <br> * Page 14, paragraph 2; figures 6-8 * | 6 | |
| A | DE-C- 452 981 (STÖHR) <br> * Page 2, lines 37-79; figures 1,2 * | 6,8 | |
| | --- -/- | | |

The present search report has been drawn up for all claims

| Place of search | Date of completion of the search | Examiner |
|---|---|---|
| THE HAGUE | 15-07-1986 | BOETS A.F.J. |

## DOCUMENTS CONSIDERED TO BE RELEVANT

Page 3

| Category | Citation of document with indication, where appropriate, of relevant passages | Relevant to claim | CLASSIFICATION OF THE APPLICATION (Int. Cl 4) |
|---|---|---|---|
| A | GB-A- 567 202 (TEMPLETON) | | |
| A | FR-A- 893 340 (BENNO SCHILDE) | | |
| A | US-A-4 168 776 (HOEBOER) | | |
| A | GB-A-2 086 268 (NIPPON KOKAN) | | |
| A | EP-A-0 005 740 (SAPAL) | | |

-----

TECHNICAL FIELDS
SEARCHED (Int. Cl.4)

The present search report has been drawn up for all claims

| Place of search THE HAGUE | Date of completion of the search 15-07-1986 | Examiner BOETS A.F.J. |
|---|---|---|